# EUROPÄISCHE PATENTSCHRIFT

(11) **EP 1 801 554 B1**
(45) Veröffentlichungstag und Bekanntmachung des Hinweises auf die Patenterteilung: **23.07.2014**
(21) Anmeldenummer: 07001421.2
(22) Anmeldetag: 02.09.2002
(51) Int. Cl.: G01J 5/04, G01J 5/02, G01J 5/10, G01J 5/12, G01J 5/20

(54) **Sensor zum berührungslosen Messen einer Temperatur**
Sensor zum berührungslosen Messen einer Temperatur
Capteur pour la mesure sans contact d'une température

(30) Priorität: 10.09.2001 DE 10144343
(43) Veröffentlichungstag der Anmeldung: 27.06.2007
(62) Teilanmeldung aus: 02019184.7
(73) Patentinhaber: Excelitas Technologies Singapore Pte Ltd., Singapore 138628 (SG)
(72) Erfinder: Schieferdecker, Jörg, 65388 Schlangenbad (DE); Hausner, Martin, 65193 Wiesbaden (DE); Leneke, Wilhelm, 65232 Taunusstein (DE); Simon, Marion, 65307 Bad Schwalbach (DE)
(74) Vertreter: Beetz & Partner

(56) Entgegenhaltungen:
- EP-A- 0 898 159
- EP-A- 1 039 280
- DE-A- 19 710 946
- DE-A1- 19 735 379
- DE-A1- 19 843 984
- DE-C1- 4 241 045
- GREGORY T A KOVACS ET AL: "Bulk Micromachining of Silicon", PROCEEDINGS OF THE IEEE, IEEE. NEW YORK, US, vol. 86, no. 8, 1 August 1998 (1998-08-01) , XP011044069, ISSN: 0018-9219

## Beschreibung

Die Erfindung betrifft einen Sensor zum Messen einer Temperatur mittels eines auf und/oder unter einer Membran aufgebrachten wärmesensitiven Bereichs, wobei die Membran über einer Aussparung angeordnet ist.

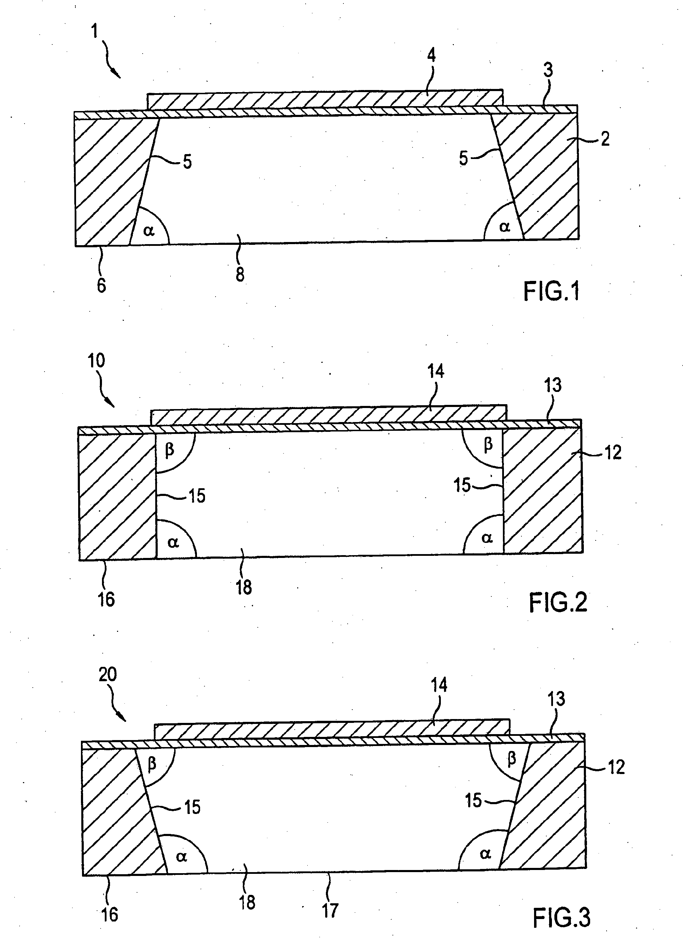

Einen solchen Sensor zeigt Fig. 1. Der Sensor gemäß Fig. 1 weist Seitenwände auf, die in einem Winkel α zur Unterseite des Sensors, also der der Membran gegenüberliegenden Seite, angeordnet sind. Bei einem bekannten Sensor gemäß Fig. 1 beträgt der Winkel α in etwa 54,7°.

Bekannt sind solche Sensoren als thermische Infrarot-Sensoren, die insbesondere als Thermopile-Sensoren ausgestaltet sind, und bei denen der Sensor in Mikromechanik-Technologie hergestellt wird. Dabei befindet sich auf der Oberseite eines Silizium-Substrats, aus dem der Sensor hergestellt wird, eine dünne Membran, die aus dielektrischen Schichten, z.B. SiO₂ oder Si₃N₄ oder deren Kombination, hergestellt ist. Die Membran wird durch anisotropes Ätzen, z.B. durch KOH oder EDP, ausgeführt, wobei quadratische Membranstrukturen im Silizium entstehen können, wenn die Kristallorientierung des Silizium-Chips. <100> ist. Die Wände der Siliziumätzung folgen der sogenannten 111-Ebene, wodurch die charakteristischen schrägen Wände von ca. 54,7° entstehen. Entsprechende Sensoren zur Temperaturmessung sind z.B. aus der EP 1 039 280 A2, EP 1 045 232 A2, EP 0 599 364 B1, US 3,801,949, US 5,693,942, DE 42 21 037 A1 und der DE 197 10 946 A1 bekannt.

Aus der EP 0898159 ist ein Sensorsystem zum Erfassen von Wärmestrahlung bekannt. Das Substrat des Systems weist Materialaussparungen unter jeweiligem Sensorelement auf, die durch ein reaktives Ionenätzverfahren geätzt sind.

DE-A-19843984 offenbart ein Verfahren zur Herstellung eines Infrarotsensors auf einem Halbleitersubstrat, in dem mindestens eine Aussparung durch isotropes Ätzen oder Trockenätzen gebildet ist. Die Aussparungen können sich als Öffnungen durch die gesamte Dickte des Halbleitersubstrats erstrecken. Die Querschnittsabmessungen der Öffnungen sind nämlich über die Dicke des Substrats hinweg konstant.

DE 4 241 045 und XP 011044069 befassen sich allgemein mit dem reaktiven Ionenätzverfahren.

Aufgabe der Erfindung ist es, einen verbesserten Sensor zur Temperaturmessung anzugeben. Dabei ist es wünschenswert, einen entsprechenden Sensor bei gleicher Empfindlichkeit möglichst mit geringeren Abmessungen als die bekannten Sensoren zu gestalten, oder einen Sensor bei gleichen Abmessungen empfindlicher zu gestalten.

Diese Aufgabe wird durch einen Sensor zum Messen einer Temperatur gemäß dem Anspruch 1 gelöst. Als reaktives Ionenätzverfahren wird dabei in besonders vorteilhafterweise deep reactive ion etching (DRIE) eingesetzt. Ein derartiger Sensor weist eine in Bezug auf seine Größe besonders hohe Empfindlichkeit auf. Ein solcher Sensor ist insbesondere im Vergleich zu bekannten Sensoren bei gleicher Empfindlichkeit merklich kleiner. Dabei wird das reaktive Ionenätzverfahren in vorteilhafter Ausgestaltung der Erfindung derart eingesetzt, daß die Aussparung seitlich volldig durch Seitenwände begrenzt ist, insbesondere wobei aneinandergrenzende Seitenwände in einem Winkel von mindestens 40° zueinander angeordnet sind.

In weiterhin vorteilhafter Ausgestaltung der Erfindung sind aneinandergrenzende Seitenwände in einem Winkel von mindestens 45°, vorteilhafterweise in einem Winkel von mindestens 80°, zueinander angeordnet.

Auf dem wärmesensitiven Bereich kann eine sogenannte Passivierungsschicht, z.B. aus Si₃N₄, aufgebracht sein.

Ein besonders kleiner Sensor wird durch eine vorteilhafte Ausgestaltung der Erfindung erzielt, bei der aneinandergrenzende Seitenwände in einem Winkel von im wesentlichen 90°, z.B. 80° bis 100°, zueinander angeordnet sind. Ein solcher Sensor hat bei großer Sensitivität eine besonders geringe Abmessung, denn ein solcher Sensor ist bei gleicher Sensitivität in etwa 0,5 - 0,7 mm kleiner als bekannte Sensoren.

Ferner sind alle Seitenwände derart in einem Winkel zwischen 70° und 85° zu der Membran angeordnet, daß die die Aussparung begrenzende Fläche der Membran größer ist als eine der Membran gegenüberstehende offene Fläche. Ein solcher Sensor ist ohne Einbuße der Empfindlichkeit mechanisch besonders stabil.

In weiterhin vorteilhafter Ausgestaltung der Erfindung bestehen alle Seitenwände im wesentlichen aus Silizium.

In weiterhin vorteilhafter Ausgestaltung der Erfindung ist der Sensor als Thermopile ausgebildet, wobei der wärmesensitive Bereich eine Reihenschaltung aus zumindest zwei thermoelektrischen Materialien, insbesondere Materialien jeweils aus p-leitendem Silizium und Aluminium oder n-leitendem Silizium und Aluminium oder p-leitendem Silizium und n-leitendem Silizium, aufweist. Das thermoelektrische Material kann kristallines oder polykristallines Silizium, Polysilizium-Germanium oder amorphes Silizium sein. Besonders vorteilhaft ist es dabei, wenn die Reihenschaltung nebeneinander angeordnete Bereiche aus p-leitendem Silizium und n-leitendem Silizium aufweist, die über eine Metallbrücke, insbesondere Aluminium (vorteilhafterweise mit zwei Kontaktfenstern), miteinander verbunden sind. Durch die Ausgestaltung der nebeneinander angeordneten Bereiche aus p-leitendem Silizium und n-leitendem Silizium läßt sich die Signalspannung des Sensors gegenüber einer Ausführungsform aus n-leitendem Polysilizium und Aluminium um 30 bis 80 % erhöhen.

In weiterhin vorteilhafter Ausgestaltung des Sensors als Thermopile weist die Reihenschaltung zumindest eine p-leitende Siliziumschicht und zumindest eine n-leitende Siliziumschicht auf, die übereinander angeordnet und durch eine Isolationsschicht, insbesondere durch Siliziumoxid oder Siliziumnitrid, getrennt sind. Auf diese Weise läßt sich die Signalspannung des Sensors um weitere 10 bis 15 % erhöhen.

In weiterhin vorteilhafter Ausgestaltung der Erfindung ist der Sensor als pyroelektrischer Sensor ausgebildet, wobei der wärmesensitive Bereich einen Stapel aus zwei Elektrodenschichten und eine zwischen den zwei Elektrodenschichten angeordnete pyroelektrische Schicht, insbesondere eine pyroelektrische Dünnschicht, z.B. pyroelektrische Keramik oder Polymerschichten, aufweist, die insbesondere durch sputtern, Aufschleudern oder CVD-Prozess auf der unteren Elektrodenschicht aufgebracht ist.

In weiterhin vorteilhafter Ausgestaltung der Erfindung ist der Sensor als Bolometer ausgebildet, wobei der wärmesensitive Bereich eine Mäanderschicht aus einem Metalloxid oder einem Halbleiter, insbesondere mit einem sehr hohen Temperaturkoeffizienten, d.h. insbesondere einem Temperaturkoeffizienten von mindestens 2·10⁻³ K⁻¹, bevorzugt 2·10⁻² K⁻¹, des Widerstandes aufweist.

In weiterhin vorteilhafter Ausgestaltung der Erfindung ist die Membran rechteckig, vorteilhafterweise quadratisch. Dabei weist die Membran in vorteilhafter Ausgestaltung der Erfindung an ihren Ecken Aussparungen auf, so daß sich eine kreuzförmige Grundfläche ergibt. In diesen Aussparungen sind vorteilhafterweise Bondinseln vorgesehen.

In weiterhin vorteilhafter Ausgestaltung der Erfindung ist der Sensor in einen Halbleiterchip, insbesondere einen Siliziumchip, integriert.

Beim einem Verfahren zum Herstellen eines erfindungsgemäßen Sensors zum Messen einer Temperatur wird eine Membran auf einen Träger, vorteilhafterweise einen Silizium träger, aufgebracht und unter der Membran durch ein reaktives Ionenätzverfahren eine Aussparung in den Träger geätzt. Als reaktives Ionenätzverfahren wird dabei in besonders vorteilhafter Weise deep reactive ion etching (DRIE) eingesetzt.

Zur Herstellung der nahezu senkrechten Seitenwände der Ätzgruben im Silizium wird vorteilhaft ein sog. ICP-Reaktor (inductively coupled plasma) benutzt, bei dem im Gegensatz zu einem RIE-Reaktor (reactive ion etching) dem Plasma zusätzlich über induktive Einkopplung Energie zugeführt wird. Dies führt zu einer extrem hohen Ionisationsdichte und ermöglicht hohe Ätzraten von einigen µm Silizium pro Minute.

Das (isotrope) Ätzen erfolgt mit Fluor-Radikalen (z.B. SF6 als Ätzgas), wobei im rhythmischen Wechsel einer Ätzphase eine sog. Passivierungsphase folgt, bei der an der Oberfläche der Seitenwände (der Ätzgruben) eine Polymerschicht abgeschieden wird (z.B. durch Zugabe von C4F8), die eine seitlich gerichtete Ätzung verhindert. Am Boden der Gruben wird durch Anlegen einer BIAS-Spannung die Polymerbildung verhindert. Dieser Prozeß ist z.B. in der US 550 18 93 näher offenbart

Überraschenderweise hat sich gezeigt, daß oben beschriebenes Verfahren (im folgenden auch als Prozeß bezeichnet) für folgende Anwendungen einsetzbar ist:
- Sogenanntes "Through the wafer etching": Im Gegensatz zu üblichen Prozessen mit einer Ätztiefe von wenigen zehn µm wird der Wafer vollständig durchgeätzt (Ätztiefe ca. 200 bis 800 µm)
- Die dem Plasma während des Ätzvorganges ausgesetzte Fläche beträgt ca. 20% bis 50% der gesamten Waferfläche. (Übliche Prozesse ätzen auf nur wenigen % der Gesamtfläche.) Um eine ausreichende Homogenität der Ätztiefe über den gesamten Wafer sicherzustellen, muß der Prozeß mit sehr geringer Selektivität zum Maskenmaterial geführt werden. Dies wiederum erfordert die Verwendung eines extrem widerstandsfähigen Maskenmaterials.

Weiterhin hat sich gezeigt, daß durch eine geeignete Prozeßführung bestimmte Eigenschaften des Sensorelements beeinflußt werden können:
- Durch Reduzierung der Passivierungszyklen verläuft der Ätzprozeß etwas weniger anisotrop und man erreicht keine ideal vertikalen Wände, sondern eine Aufweitung der Ätzgrube nach unten. Man bezeichnet dieses Ätzprofil als "re-entrant". Dies ist v.a. bei Mehrelementsensoren von Vorteil, bei denen eine dünne Zwischenwand von einigen µm eine Ätzgrube von der danebenliegenden trennt. Die Wände sind an der Waferrückseite dünner als an der Membranseite, was zu erhöhter Stabilität führt.
- Um beim Auftreffen auf die dielektrische Membran diese nicht zu schädigen und trotzdem eine gute Strukturübertragung und saubere Membranoberfläche sicherzustellen, sollte der Gesamtprozeß in mehreren Schritten erfolgen, die sich in der Wahl der Prozeßparameter grundlegend unterscheiden. Nach einem ersten Prozeßschritt mit guter Homogenität und (vorteilhaft) hoher Ätzrate folgt, sobald die Membran erreicht wird, ein Prozeßschritt mit sehr hoher Selektivität zum Membranmaterial, d.h. geringer Ätzrate bzgl. Siliziumoxid. Ein nachfolgender rein isotroper Prozeßschritt (d.h. ohne Passivierungszyklen) schließlich entfernt eventuelle Siliziumreste auf der Membran.
- Zur Säuberung der Membran kann weiterhin ein kurze naßchemische Ätzung in TMAHW (Tetraammoniumhydroxid in Wasser) verwendet werden, wobei durch geeignete Verfahren, z.B. Abdeckung durch Photolack, die Wafervorderseite geschützt wird.

In vorteilhafter Ausgestaltung des erfindungsgemäßen Verfahrens wird vor dem Ätzen der Aussparung auf einer der Membran abgewandten Seite des Trägers eine Schicht mit niedriger Ätzrate für das reaktive Ionenätzverfahren aufgebracht. Eine solche Schicht ist vorteilhafterweise eine photolithographisch strukturierbare Schicht, z.B. eine Schicht aus dickem Photolack, eine Siliziumoxidschicht oder eine Metallschicht.
- In weiterhin vorteilhafter Ausgestaltung dieses Verfahrens wird auf die Membran ein wärmesensitiver Bereich aufgebracht.

Weitere vorteilhafte Ausgestaltungen ergeben sich aus den Unteransprüchen und aus der nachfolgenden Beschreibung von Ausführungsbeispielen. Dabei zeigen:
- Fig. 1: einen bekannten Sensor zur Temperaturmessung;
- Fig. 2: ein Beispiel für einen Temperatursensor;
- Fig. 3: ein Ausführungsbeispiel für einen erfindungsgemäßen Temperatursensor;
- Fig. 4: den Einsatz eines erfindungsgemäßen Temperatursensors in einer Temperaturmeßeinrichtung;
- Fig. 5: den Einsatz eines erfindungsgemäßen Temperatursensors in einer Temperaturmeßeinrichtung;
- Fig. 6: einen Chipkörper;
- Fig. 7: eine besonders vorteilhafte Ausgestaltung eines Chipkörpers;
- Fig. 8: eine Draufsicht auf ein als Thermopile ausgestalteten Temperatursensor;
- Fig. 9: eine Seitenansicht eines weiteren als Thermopile ausgebildeten Temperatursensors;
- Fig. 10: eine besonders vorteilhafte Ausgestaltung eines als Thermopile ausgestalteten Temperatursensors;
- Fig. 11: eine Seitenansicht eines als pyroelektrischer Sensor ausgebildeten Temperatursensors;
- Fig. 12: einen Chip mit mehreren Sensoren; und
- Fig. 13: ein prinzipielles Verfahren zum Herstellen eines Sensors.

Fig. 1 zeigt einen bekannten Sensor 1 zur Temperaturmessung. Dieser weist einen Siliziumkörper 2 mit einer Aussparung 8 auf. Über der Aussparung ist eine Membran 3 angeordnet. Auf der Membran ist ein wärmesensitiver Bereich 4 aufgebracht. Die Aussparung 8 ist durch Seitenwände 5 begrenzt, die zu der Unterseite 6 des Chipkörpers 2, d.h. der in Bezug auf die Aussparung 8 der Membran 3 gegenüberliegenden Seite, in einem Winkel α von ca. 54,7° angeordnet sind.

Fig. 2 zeigt ein Beispiel für einen Sensor 10 zur Temperaturmessung. Dieser weist einen Chipkörper 12 mit einer Aussparung 18 auf. Die Aussparung 18 ist seitlich durch Seitenwände 15 begrenzt. Über der Aussparung 18 ist eine Membran 13 angeordnet. Auf der Membran 13 ist wiederum ein wärmesensitiver Bereich 14 angeordnet. Dieser ist in besonders vorteilhafter Ausgestaltung infrarotsensitiv. Die Seitenwände 15 der Aussparung 18 sind zu der Unterseite 16 des Chipkörpers 12 in einem Winkel α ausgerichtet. Der Winkel α beträgt vorteilhafterweise 80 bis 100°. In Bezug auf die Membran 13 sind die Seitenwände 15 in einem Winkel β von entsprechend 100 bis 80° angeordnet.

Fig. 3 zeigt einen gegenüber dem Temperatursensor 10 in Fig. 2 vorteilhaften Sensor 30 zum Messen einer Temperatur. Dabei haben gleiche Teile die gleichen Bezugszeichen wie in Fig. 2. Die Seitenwände 15 der Aussparung 18 beim Sensor 30 sind derart zur Membran 13 angeordnet, daß der Winkel β zwischen 80 und 89° beträgt. Auf diese Weise ist die der Membran 13 gegenüberliegende Fläche 17 an der Unterseite 16 des Chipkörpers 12 kleiner als die die Aussparung 18 begrenzende Fläche der Membran 13. Bei vemachlässigbarem Verlust an Sensitivität wird auf diese Weise ein besonders stabiler Chipkörper 12 mit geringen Außenabmessungen erreicht.

Die Membran 13 der Sensoren 10 und 20 in den Fig. 2 und Fig. 3 besteht vorteilhafterweise aus dielektrischen Schichten, z.B. aus SiO₂ oder Si₃N₄ SiC oder deren Kombination. Die Membran wird durch reaktives Trockenätzen (sogenanntes DRIE) ausgeführt.

Bei Ausgestaltung der Sensoren 10 bzw. 20 als Thermopile weist der wärmesensitive Bereich 14 eine Reihenschaltung aus zumindest zwei thermoelektrischen Materialien, wie etwa n-leitendes Polysilizium und Aluminium, p-leitendes Polysilizium und Aluminium oder vorteilhafterweise n-leitendes und p-leitendes Silizium, auf. Bei einer Ausgestaltung des Sensors 10 bzw. des Sensors 20 als pyroelektrischer Sensor weist der wärmesensitive Bereich 14 eine pyroelektrische Dünnschicht zwischen einer Metallrückelektrode und einer Deckelelektrode auf. In einer Ausführung des Sensors 10 bzw. des Sensors 20 als Bolometer weist der wärmesensitive Bereich 14 eine Mäanderschicht aus einem Metalloxid oder einem Halbleiter auf.

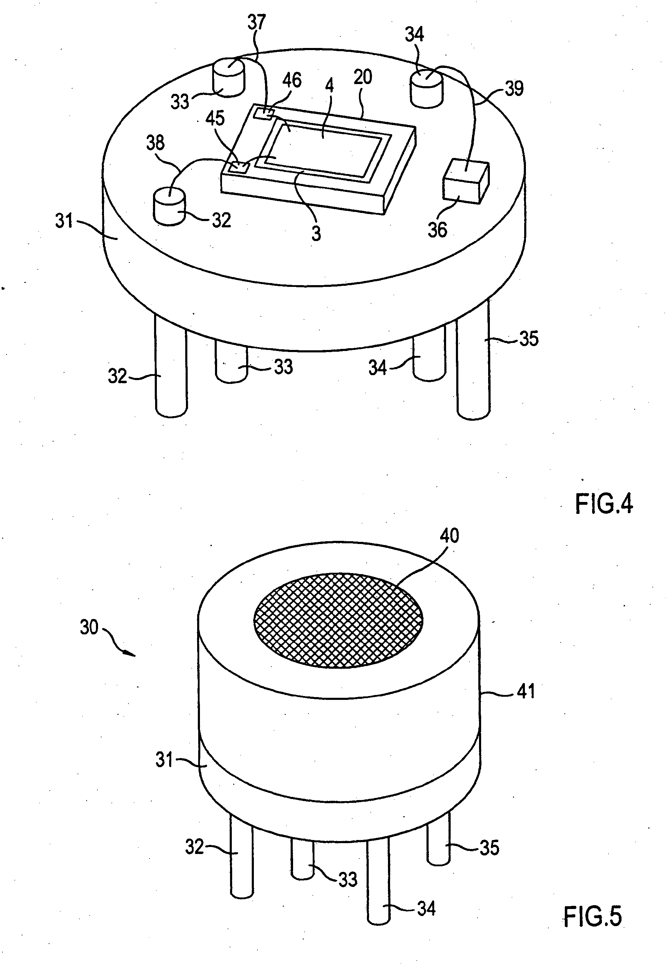

Fig. 4 und Fig. 5 zeigen den vorteilhaften Einsatz eines Sensors 20 in einer Temperaturmeßeinrichtung. Anstelle des Sensors 20 kann auch der Sensor 10 verwendet werden. Gemäß dem Ausführungsbeispiel in Fig. 4 ist der Sensor 20 auf einer Bodenplatte 31, insbesondere zentrisch, plaziert. Die Bodenplatte 31 ist z.B. eine Transistor-Bodenplatte TO-5 oder TO-18. Der Chip 20 wird vorteilhafterweise mittels eines Epoxidharzklebers mit guter Wärmeleitfähigkeit auf die Bodenplatte 31 geklebt.

Durch die Bodenplatte 31 sind Kontakte 32, 33 und 34 geführt. Die Kontakte 32 und 33 sind über leitende Verbindungen 38 und 37 mit sogenannten Bondinseln 45 und 46 auf dem Sensor 20 verbunden.

Vorteilhafterweise ist zur Messung der Eigentemperatur der Temperaturmeßeinrichtung 30 ein zusätzlicher Temperatursensor 36 auf der Bodenplatte 31 angeordnet. Dieser ist über einen Leiter 39 mit dem Kontakt 34 verbunden.

Auf der Bodenplatte ist - wie in Fig. 5 dargestellt - ein Gehäuse 41 angeordnet, das den Sensor 20 umschließt. Das Gehäuse 41 weist einen Infrarotfilter 40 auf. In vorteilhafter Weise ist das Gehäuse 41 als Transistorkappe ausgeführt.

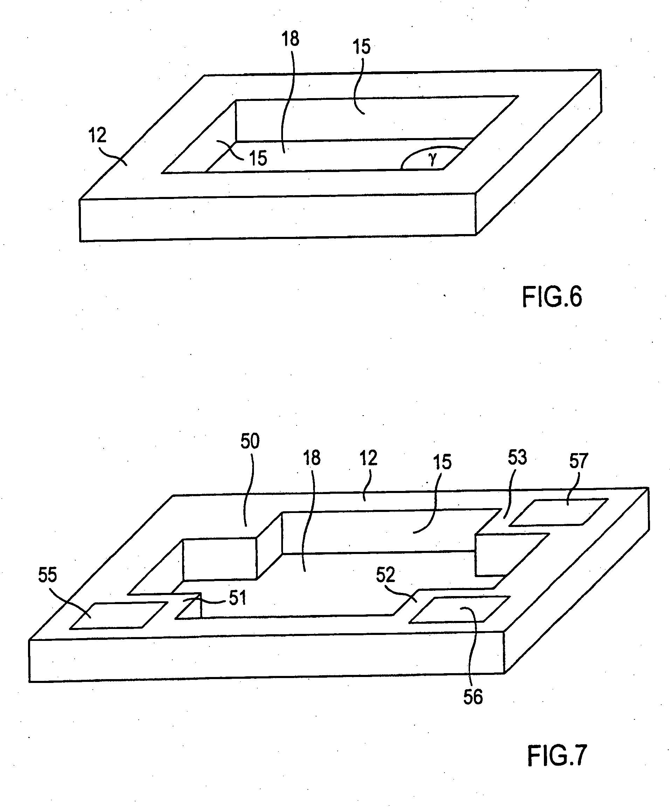

Fig. 6 zeigt den Aufbau des Chipkörpers 12. Das Bezugszeichen 18 bezeichnet die Aussparung und das Bezugszeichen 15 bezeichnet die Seitenwände. Die Seitenwände sind vorteilhafterweise in etwa rechtwinklig zueinander angeordnet, d.h. der mit dem Bezugszeichen γ bezeichnete Winkel ist in etwa 90°.

Fig. 7 zeigt eine besonders vorteilhafte Ausgestaltung des Chipkörpers 12. Dabei weist die Aussparung 18 eine kreuzförmige Grundfläche auf, so daß der Chipkörper 12 die Aussparung 18 mit massiven Ecken 50, 51, 52 und 53 begrenzt. In den Ecken 51, 52 und 53 sind Bondinseln 55, 56 und 57 vorgesehen.

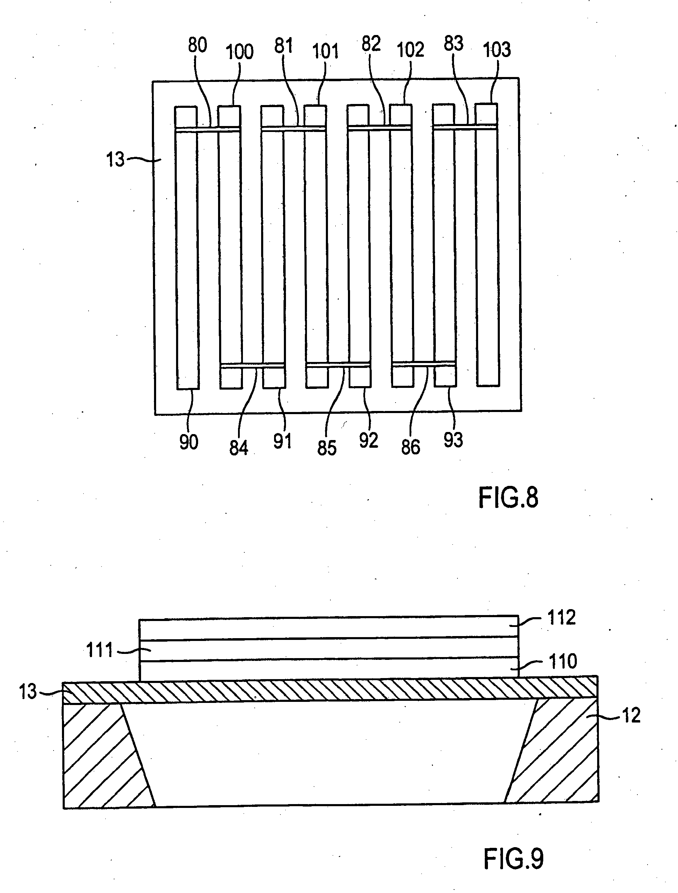

Fig. 8 zeigt eine Draufsicht auf einen als Thermopile ausgebildeten Temperatursensor. Dabei sind auf der Membran 13 Streifen 90, 91, 92, 93 aus p-leitendem Silizium, p-leitendem polykristallinem Silizium oder p-leitendem polykristallinem Silizium-Germanium und Streifen 100, 101, 102, 103 aus n-leitendem Silizium, n-leitendem polykristallinem Silizium oder n-leitendem polykristallinem Silizium-Germanium angeordnet. Die einzelnen Streifen 90, 91, 92, 93, 100, 101, 102, 103 sind über Stege 80, 81, 82, 83, 84, 85, 86, vorteilhafterweise Aluminiumstege, miteinander zu einer elektrischen Reihenschaltung verbunden. In Fig. 8 ist eine Konfiguration mit acht Streifen dargestellt. Vorteilhafterweise sind auf der Membran 13 zwanzig bis zweihundert Streifen, vorzugsweise sechzig bis hundertzwanzig Streifen,k angeordnet. Selbstverständlich sind alternative Ausführungen zu den Stegen 80, 81, 82, 83, 84, 85, 86 zur Erzielung einer Reihenschaltung der Streifen 90, 91, 92, 93, 100, 101, 102, 103 möglich.

Fig. 9 zeigt eine Seitenansicht eines alternativen als Thermopile ausgebildeten Temperatursensors. Dabei umfaßt der auf der Membran 13 angeordnete wärmesensitive Bereich zwei Schichten 110 und 112 aus thermoelektrischem Material, die durch eine Isolationsschicht 111, z.B. aus Siliziumnitrid oder Siliziumoxid, getrennt sind. Die Schicht 110 besteht dabei aus n-leitendem oder p-leitendem Silizium, n-leitendem oder p-leitendem polykristallinem Silizium oder n-leitendem oder p-leitendem polykristallinem Silizium-Germanium. Die Schicht 112 besteht aus p-leitendem oder n-leitendem Silizium, p-leitendem oder n-leitendem polykristallinem Silizium oder p-leitendem oder n-leitendem polykristallinem Silizium-Germanium. Die beiden Schichten sind mittels eines nicht dargestellten Kontaktfensters in Reihe geschaltet. In vorteilhafter Ausgestaltung sind zwei oder drei durch weitere Isolationsschichten voneinander getrennte Anordnungen gemäß der Anordnung der Schichten 110, 111 und 112 vorgesehen.

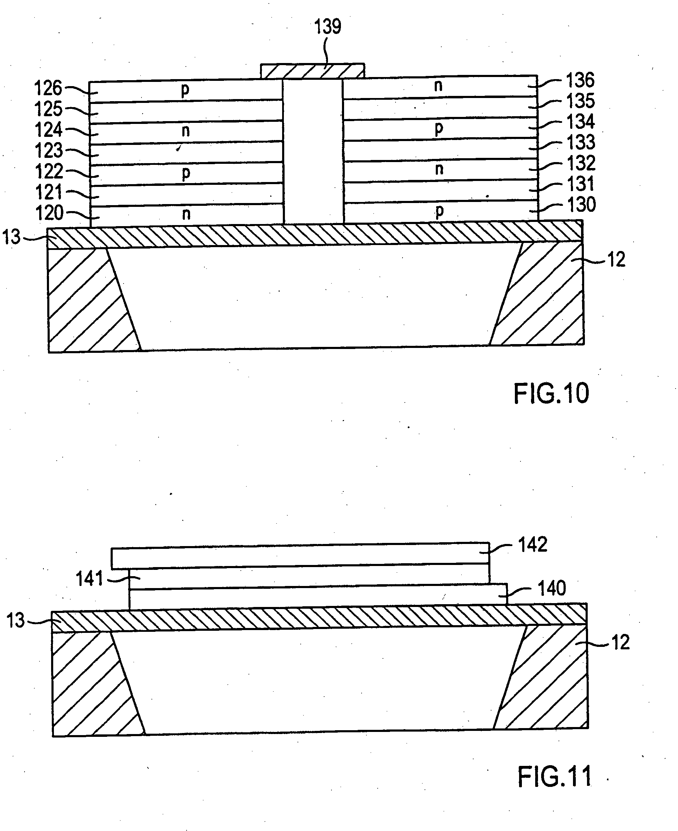

Besonders vorteilhaft ist es, n-leitende und p-leitende Schichten sowohl übereinander als auch nebeneinander anzuordnen, wobei die einzelnen Schichten in Reihe geschaltet sind. Ein vereinfachtes Beispiel einer solchen Schichtung zeigt Fig. 10. Dabei bezeichnen Bezugszeichen 120, 124, 132 und 136 Schichten bzw. Streifen aus n-leitendem Silizium, n-leitendem polykristallinem Silizium oder n-leitendem polykristallinem Silizium-Germanium. Bezugszeichen 122, 126, 130 und 134 bezeichnen Schichten bzw. Streifen aus p-leitendem Silizium, p-leitendem polykristallinem Silizium oder p-leitendem polykristallinem Silizium-Germanium. Bezugszeichen 121, 123, 125, 131, 133, 135 bezeichnen Isolationsschichten. Die Schichten 120 und 122, 122 und 124, 124 und 126, 130 und 132, 132 und 134 sowie 134 und 136 sind über Kontaktfenster miteinander elektrisch verbunden. Die Schichten 126 und 136 sind über einen Aluminiumsteg 139 miteinander elektrisch verbunden, so daß sich eine Reihenschaltung aus den Schichten 120, 122, 124, 126, 136, 134, 132 und 130 ergibt. Dabei ist vorteilhafterweise vorgesehen, entsprechend Fig. 8 mehr als zwei Stapel aus Schichten 120 bis 126 und 130 bis 136 vorzusehen.

Fig. 11 zeigt die Seitenansicht eines Ausführungsbeispiels für einen als pyroelektrischen Sensor ausgebildeten Temperatursensor. Dabei umfaßt der auf der Membran 13 aufgebrachte wärmesensitive Bereich eine Unterelektrode 140 und eine Oberelektrode 142 sowie eine zwischen der Unterelektrode 140 und der Oberelektrode 142 angeordnete pyroelektrische Schicht.

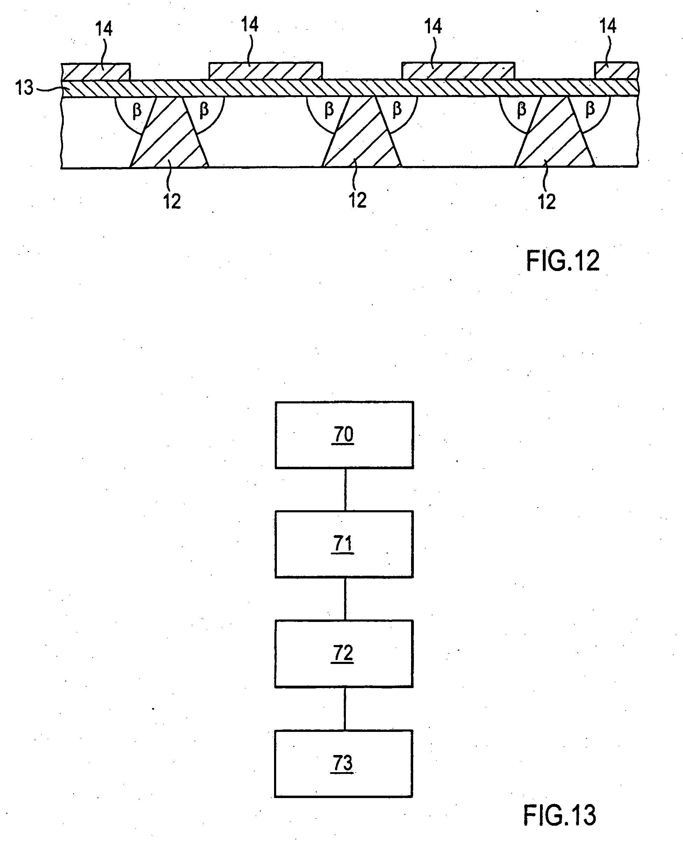

Die erfindungsgemäßen Sensoren können einzeln oder zu mehreren auf einem Chip angeordnet werden. Letzteres ist in Fig. 12 dargestellt. Dabei zeigt Fig. 12 einen Chip 200, der mehrere Sensoren 20 gemäß Fig. 3 umfaßt.

Fig. 13 zeigt ein prinzipielles Verfahren zum Herstellen eines Sensors 10 bzw. 20. Dabei wird in einem ersten Schritt 70 zunächst die Membran 13 auf einem Träger aufgebracht, der im fertigen Zustand des Sensors den Siliziumkörper 12 bildet.

In einem nächsten Schritt 71 wird auf einer der Membran abgewandten Seite 16 des Trägers, d.h. in Bezug auf vorgenannte Ausführungsbeispiele der Seite 16 des Siliziumkörpers 12, eine Schicht mit niedriger Ätzrate für das reaktive Ionenätzverfahren aufgebracht. Eine solche Schicht ist vorteilhafterweise eine photolithographisch strukturierbare Schicht (siehe oben).

In einem weiteren Schritt 72 wird ein wärmesensitiver Bereich 14 auf die Membran 13 aufgebracht.

In einem weiteren Schritt 73 wird anschließend unter der Membran eine Aussparung durch ein vorhergehend erläutertes reaktives Ionenätzverfahren in den Träger geätzt.

Schritt 73 kann auch vor dem Schritt 72 erfolgen.

In besonders vorteilhafter Weise wird bei allen Ausgestaltungen der Sensoren der wärmesensitive Bereich mit einer infrarotabsorbierenden Schicht (in den Figuren nicht dargestellt), die photolithographisch strukturierbar ist, abgedeckt . Diese Schicht ist vorteilhafterweise ein Photolack mit Absorberpartikeln, wie er insbesondere in der DE 4221037 A1 "Thermischer Sensor mit Absorberschicht" offenbart ist.

## Patentansprüche

1. Sensor 20) zum Messen einer Temperatur mittels eines auf und/oder unter einer Membran (13) aufgebrachten wärmesensitiven Bereichs (14), wobei die Membran von einem Chipkörper (12) mit einer Aussparung (18) unter der Membran gehalten wird, wobei die Seitenwände (15) der Aussparung (18) eben sind,
wobei die Aussparung (18) durch ein reaktives Ionenätzverfahren vollständig durch den Chipkörper (12) geätzt ist,
**dadurch gekennzeichnet, dass**
die Seitenwände (15) der Aussparung (18) mit der Membran (13) einen Winkel (β) zwischen 70° und 85° einschließen.

2. Sensor (20) nach Anspruch 1, **dadurch gekennzeichnet, dass** aneinandergrenzende Seitenwände (15) in einem Winkel von mindestens 80°, vorzugsweise 90° zueinander angeordnet sind.

3. Sensor (20) nach einem oder mehreren der vorherigen Ansprüche, wobei der wärmesensitive Bereich (14) eine Reihenschaltung aus zumindest zwei thermoelektrischen Materialien aufweist, **dadurch gekennzeichnet, dass** eines der thermoelektrischen Materialien jeweils p-leitendes Silizium, p-leitendes polykristallines Silizium oder p-leitendes polykristallines Silizium-Germanium aufweist und das andere Material n-leitendes Silizium, n-leitendes polykristallines Silizium oder n-leitendes polykristallines Silizium-Germanium aufweist.

4. Sensor nach Anspruch 3, **dadurch gekennzeichnet, daß** die beiden Materialien schichtweise ausgebildet, auf der Membran nebeneinander angeordnet und seriell miteinander verbunden sind.

5. Sensor nach Anspruch 3 oder 4, **dadurch gekennzeichnet, daß** die beiden Materialien schichtweise ausgebildet, bezüglich der Membran übereinander angeordnet und seriell miteinander verbunden sind, wobei eine Isolierschicht (111) zwischen ihnen vorgesehen sein kann.

6. Temperaturmeßvorrichtung mit einem Sensor nach einem oder mehreren der vorhergehenden Ansprüche auf einer Bodenplatte (31), und mit durch die Bodenplatte (31) geführten Kontakten (32, 33), die mit dem Sensor (20) kontaktiert sind.

7. Vorrichtung nach Anspruch 6, **dadurch gekennzeichnet, dass** der Chipkörper (12) auf der Bodenplatte (31) mit einem Epoxidharzkleber verbunden ist.

8. Vorrichtung nach Anspruch 6 oder 7, **dadurch gekennzeichnet, daß** auf der Bodenplatte (31) ein Temperatursensor (36) für die Eigentemperatur des Sensors (20) angeordnet ist.

## Claims

1. A sensor (20) for measuring a temperature by means of a heat-sensitive area (14) which is applied onto and/or underneath a membrane (13), wherein the membrane is held by a chip body (12) with a recess (18) underneath the membrane, wherein the side walls (15) of the recess (18) are planar, wherein the recess (18) is fully etched through the chip body (12) by means of a reactive ion etching method,
**characterized in that**
the side walls (15) of the recess (18) and the membrane (13) confine an angle (β) between 70° and 85°.

2. The sensor (20) according to claim 1, **characterized in that** adjoining side walls (15) are arranged at an angle of at least 80°, preferably 90°, relative to each other.

3. The sensor (20) according to one or more of the preceding claims, wherein the heat-sensitive area (14) has a series connection of at least two thermoelectric materials, **characterized in that** one of the thermoelectric materials respectively includes p-conductive silicon, p-conductive polycrystalline silicon or p-conductive polycrystalline silicongermanium and the other material includes n-conductive silicon, n-conductive polycrystalline silicon or n-conductive polycrystalline silicongermanium.

4. The sensor according to claim 3, **characterized in that** the two materials are formed in layers, are arranged next to each other on the membrane and are connected to each other in series.

5. The sensor according to claim 3 or 4, **characterized in that** the two materials are formed in layers, are arranged on top of each other with respect to the membrane and are connected to each other in series, wherein an insulating layer (111) can be provided between them.

6. A temperature measurement device having a sensor according to one or more of the preceding claims on a base plate (31) and having contacts (32, 33) which are guided through the base plate (31) and which are in contact with the sensor (20).

7. The device according to claim 6, **characterized in that** the chip body (12) on the base plate (31) is connected to an epoxy resin adhesive.

8. The device according to claim 6 or 7, **characterized in that** a temperature sensor (36) for the intrinsic temperature of the sensor (20) is arranged on the base plate (31).

## Revendications

1. Capteur (20) pour la mesure d'une température au moyen d'une zone thermosensible (14) déposée sur et/ou sous une membrane (13), dans lequel la membrane est maintenue par un corps de puce (12) avec un évidement (18) sous la membrane, dans lequel les parois latérales (15) de l'évidement (18) sont planes, dans lequel l'évidement (18) est entièrement gravé par le corps de puce (12) par le biais d'un procédé de gravure ionique réactive,
**caractérisé en ce que**
les parois latérales (15) de l'évidement (18) forment avec la membrane (13) un angle (β) situé entre 70° et 85°.

2. Capteur (20) selon la revendication 1, **caractérisé en ce que** les parois latérales adjacentes (15) sont disposées à un angle d'au moins 80°, de préférence 90°, l'une par rapport à l'autre.

3. Capteur (20) selon une ou plusieurs des revendications précédentes, dans lequel la zone thermosensible (14) présente un montage en série d'au moins deux matériaux thermoélectriques, caractérisé que ce que l'un des matériaux thermoélectriques présente respectivement du silicium conducteur p, du silicium polycristallin conducteur p ou du silicium - germanium polycristallin conducteur p et l'autre matériau présente du silicium conducteur n, du silicium polycristallin conducteur n ou du silicium - germanium polycristallin conducteur n.

4. Capteur selon la revendication 3, **caractérisé en ce que** les deux matériaux sont conçus en couches, sont disposés l'un à côté de l'autre sur la membrane, et sont raccordés l'un à l'autre en série.

5. Capteur selon la revendication 3 ou 4, **caractérisé en ce que** les deux matériaux sont conçus en couches, sont disposés l'un au-dessus de l'autre par rapport à la membrane, et sont raccordés en série l'un à l'autre, une couche isolante (111) pouvant être prévue entre les deux.

6. Dispositif de mesure de température comprenant un capteur selon une ou plusieurs des revendications précédentes sur une plaque de fond (31), et des contacts (32, 33) courant à travers la plaque de fond (31) et qui sont en contact avec le capteur (20).

7. Dispositif selon la revendication 6, **caractérisé en ce que** le corps de puce (12) est raccordé sur la plaque de fond (31) avec un adhésif en résine époxy.

8. Dispositif selon la revendication 6 ou 7, **caractérisé en ce qu'**un capteur de température (36) pour mesurer la température propre du capteur (20) est disposé sur la plaque de fond (31).
